# EUROPEAN PATENT SPECIFICATION

(11) **EP 0 778 376 B1**
(45) Date of publication and mention of the grant of the patent: **18.10.2000**
(21) Application number: 96308907.3
(22) Date of filing: 09.12.1996
(51) Int. Cl.: E04B 2/78

(54) **Structural Member**
Strukturelement
Elément de structure

(30) Priority: 08.12.1995 GB 9525166
(43) Date of publication of application: 11.06.1997
(73) Proprietor: BPB plc, Slough, Buckinghamshire SL1 3UF (GB)
(72) Inventor: Nelson, John Alexander, West Bridgford, Nottingham NG2 7SB (GB); Pritchard, Michael John, Sandiacre, Nottingham NG10 5PN (GB)
(74) Representative: Marlow, Nicholas Simon

(56) References cited:
- WO-A-93/22518
- FR-A- 2 643 700
- NL-A- 7 908 371
- US-A- 5 081 808
- US-A- 5 279 091

## Description

The present invention relates to a structural member for a hollow partition wall such as a nogging for use in the construction of hollow partition walls.

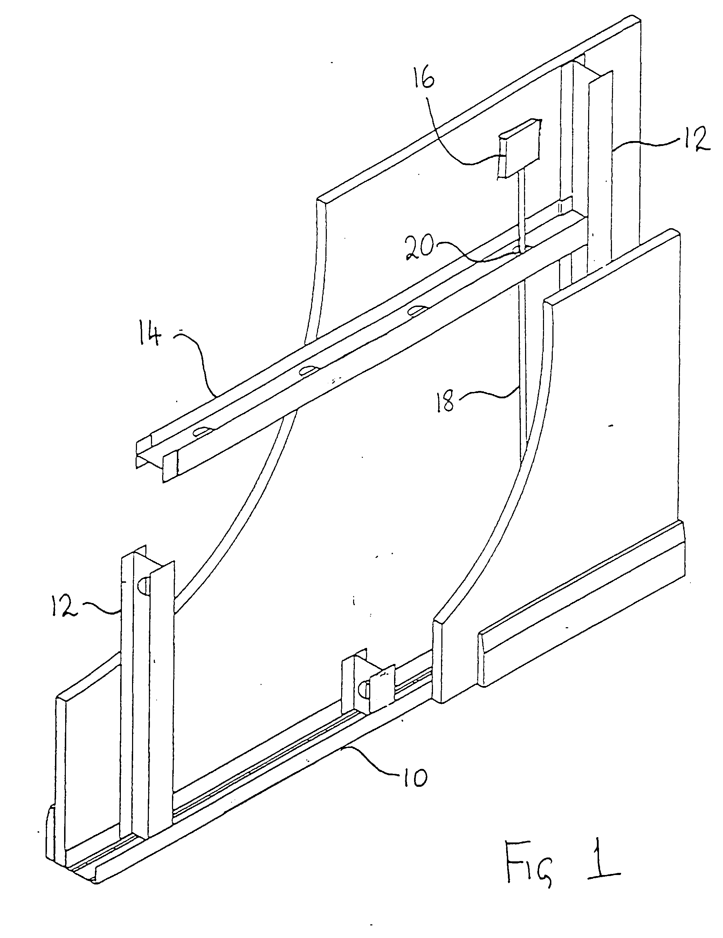

The use of plasterboard in partition walls is well known. In a conventional system, the plasterboard is employed as cladding over a rigid framework, usually formed from standard metal or wood components. Cladding panels of materials other than plasterboard are also known. Reference should now be made to Figure 1 which shows schematically details of the framework concealed within a plasterboard partition wall. The framework is assembled in situ by firstly fixing channels 10 to the ceiling and floor aligned in the plane the partition wall is to occupy. I-section studs 12 are placed in the floor and ceiling channels 10 and aligned vertically before being fixed into position. Between each pair of studs 12, a nogging 14 is inserted at mid height. The ends of the nogging 14 engage the profiled sides of the studs 12, forming a horizontal brace when secured in position.

Electrical cables, conduits and pipes can readily be accommodated within the cavity of a hollow partition wall. Typically, these services are installed at the same time as the wall is constructed. Having erected the framework, it is common practice to fix initially plasterboard to one side only of the framework so that services can be installed from the other side. Suppose that an electrical switch 16 is to be provided on one side of the partition wall in a position above the nogging 14. Electrical cable for the switch 16 which is concealed within the partition wall should be installed in straight runs, either horizontally or vertically. It should be a reasonable depth such as 50mm from the face of the partition wall not having any indication such as a switch that a cable has been installed in the cavity. In order for the electrical cable 18 to be installed vertically between the switch 16 and the floor channel 10, it passes through a standard cut-out 20 from the web of the nogging, aligned along the longitudinal axis of the nogging 14. The cut-out 20 may be lined with a rubber grommet to prevent abrasion of the cable by the nogging 14. Studs 12 and noggings 14 typically have several cut-outs along their length to facilitate the positioning of service installations which must pass through frameworks utilising these components.

US-A-5 081 808 discloses a partition system including a C-section frame member having openings for the passage of electrical cabling.

FR-A-2 643 700 discloses a structural member of hollow rectangular cross section having longitudinal rows of holes. The holes receive rivets to join the members to clips for retaining cladding panels and are disposed either side of the centre lines of opposed faces of the member.

NL-A-7 908 371 discloses a substantially C section member with an aperture on the centre line of the web of the member, midway between the two longitudinal flanges, for receiving electrical cabling.

The present applicants have appreciated that there is a desire to reduce the overall thickness of partition walls in order to reduce the amount of space lost as a result of constructing a partition wall.

In accordance with the present invention there is provided a structural member for a hollow partition wall having two longitudinal flanges for supporting the outer faces of the partition wall, the flanges being separated by a web having at least one aperture for receiving electrical cable characterised in that the or each aperture is disposed in an edge portion of the web adjacent a flange. The invention also encompasses a wall especially a partition wall comprising such a structural member.

By providing the aperture for the electrical cable adjacent a flange, it is possible to pin the cable against the inner surface of one of the cladding panels (the panel carrying the switch) of the partition wall. This ensures that the cable is as far away from the opposed panel as possible, even when passing through the support structure. In this way, it is possible to install cable for a switch in a relatively thin partition wall, say 75mm total thickness, and still have the cable a reasonable depth, such as 50mm, from the panel of the partition wall not carrying the switch.

Preferably, apertures are disposed in both edge portions of the web, adjacent both flanges. More preferably, apertures in one edge portion of the web are offset relative to apertures in the other edge portion.

The apertures can be semi-circular, square or other rectangular or of any other shape.

Providing apertures in both edge portions of the web and in offset positions gives additional flexibility in aligning the structural member in the framework of a partition wall with service points which are to be installed.

An embodiment of the invention will now be described by way of example with reference to the accompanying drawings in which:
Figure 1 is a schematic view illustrating a prior art framework concealed in a conventional plasterboard partition wall;
Figure 2 is a perspective view of part of a nogging embodying the invention; and
Figure 3 is a schematic cross-sectional view through a hollow partition wall, illustrating the advantages of the nogging of figure 2.

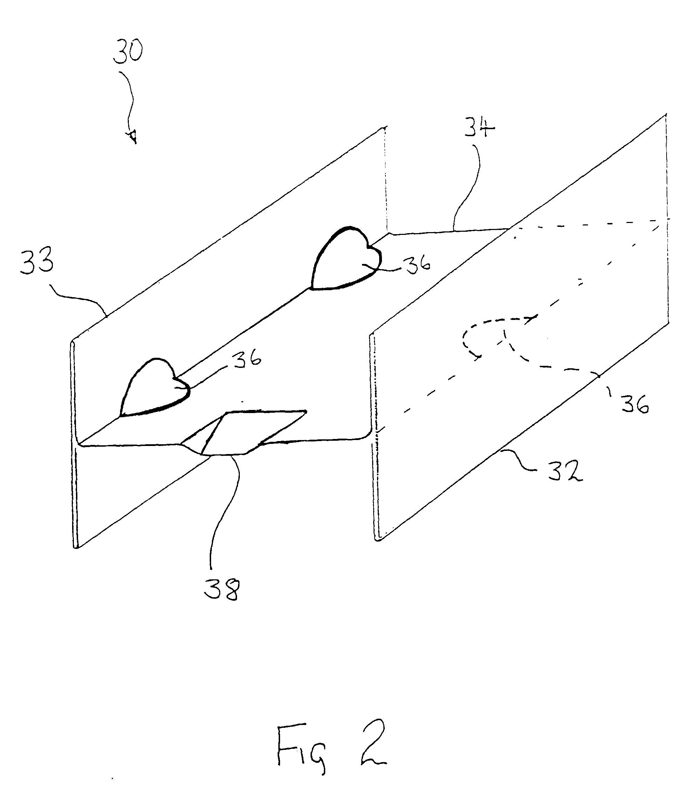

Figure 2 shows a nogging 30 which is elongate and has two longitudinal flanges 32 and 33 which are parallel to each other. The flanges 32, 33 are separated by a web 34 which has along its length a plurality of semi-circular apertures 36 for passing electrical cable therethrough. The apertures 36 are disposed on either side of the web 34, adjacent the flanges 32, 33. The aperture 36 obscured in the drawing by flange 32 is shown by a phantom line.

The nogging 30 has an I-shaped cross-section. The nogging is formed from a sheet of metal into which two rows of circular apertures are punched. The sheet is then folded at right angles along two parallel lines bisecting the circular apertures. The lateral sides of the sheet are then folded double to give the I-shaped cross-section. At the longitudinal ends of the nogging, the web can be swaged. Swaging makes it easier to reduce the separation between the flanges 32, 33 in the region of the swage 38 by squeezing the flanges together. This enables the end of the nogging 30 to be inserted into the profile of a stud for example. Once in position, the end of the nogging 30 will adopt a compression fit in the throat of the stud section 12.

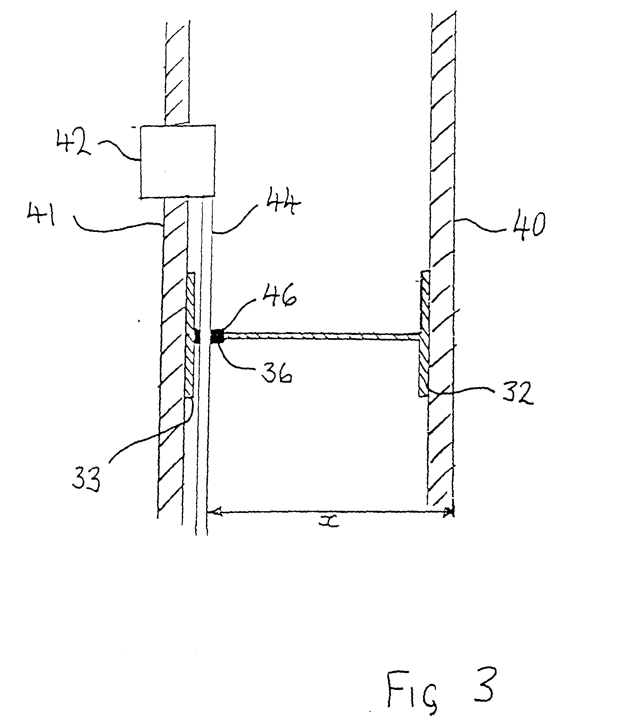

The nogging 30 can be used in place of the nogging 14 in the assembly shown in Figure 1. Figure 3 shows schematically the cross-section of a thin partition wall illustrating how the nogging 30 is used in combination with electrical cable. The flanges 32 and 33 of the nogging 30 abut plasterboard cladding sheets 40 and 41. A switch 42 is mounted in sheet 41 and is connected to electrical cable 44. The cable 44 runs vertically downwards adjacent the inner surface of sheet 41, passing through an aperture 36 in the web 34 of nogging 30. The aperture 36 is lined with a grommet 46 to prevent the cable being abraded by the metal nogging 30. The cable 44 is concealed at a depth X from the outer surface of sheet 40. The depth X is at least 50mm even though the overall thickness of the partition wall is no greater than 75mm.

## Claims

1. A structural member (30) for a hollow partition wall having two longitudinal flanges (32,33)for supporting the outer faces of the partition wall, the flanges being separated by a web (34) having at least one aperture (36) for receiving electrical cable, characterised in that the or each aperture is disposed in an edge portion of the web (34) abutting one of the longitudinal flanges (32,33).

2. A structural member (30) according to claim 1 in which apertures (36) are disposed in both edge portions of the web (34) abutting both flanges (32,33).

3. A structural member (30) according to claim 2 in which apertures (36) in the web (34) abutting one flange (32) are offset relative to apertures abutting the other flange (33).

4. A structural member (30) according to any preceding claim in which the flanges (32,33) and web (34) form an I-section.

5. A structural member (30) according to any preceding claim in which the or each aperture (36) is semi-circular.

6. A structural member (30) according to any of claims 1 to 4 in which the or each aperture is rectangular.

7. A structural member (30) according to any of claims 1 to 4 in which the or each aperture is square.

8. A method of forming a structural member (30) for a hollow partition wall having two longitudinal flanges (32,33) for supporting the outer faces of the partition wall, comprising:
forming a longitudinal line of perforations in a strip of material; and
folding the strip longitudinally along the perforations to define a web (34), a flange (32,33) and at least one aperture (36) in the web abutting one of the longitudinal flanges (32,33).

9. A method according to claim 8 in which a further line of perforations is formed parallel to the first, and in which a further longitudinal fold is made parallel to the first fold.

10. A method according to claim 8 or 9 in which the strip is further folded double longitudinally parallel to and on the outside of the or each line of perforations.

11. A wall comprising a structural member (30) according to any of claims 1 to 7.

12. A wall according to claim 11 in which the structural member (30) is substantially horizontal.

13. A partition wall according to claim 11 or 12.

14. A partition wall comprising a framework comprising vertical studs (12) extending between the floor and the ceiling and horizontal noggins (14) disposed horizontally between pairs of studs; and plasterboard cladding attached to the framework, characterised in that the noggin is a structural member according to any of claims 1 to 7.

## Patentansprüche

1. Strukturelement (30) für eine hohle Zwischenwand mit zwei länglichen Flanschen (32, 33) zum Stützen der Außenflächen der Zwischenwand, wobei die Flansche durch eine Rippe (34) mit mindestens einer Öffnung (36) zur Aufnahme eines elektrischen Kabels voneinander getrennt sind, dadurch gekennzeichnet, daß die Öffnung oder die Öffnungen in einem Eckabschnitt der Rippe (34) angeordnet ist bzw. sind, der an die länglichen Flansche (32, 33) angrenzt.

2. Strukturelement (30) nach Anspruch 1, in dem Öffnungen (36) in beiden Eckabschnitten der Rippe (34) angeordnet sind, die an beide Flansche (32, 33) angrenzen.

3. Strukturelement (30) nach Anspruch 2, in dem Öffnungen (36) in der Rippe (34), welche an einen Flansch (32) angrenzen, relativ zu den Öffnungen, welche an den anderen Flansch (33) angrenzen, verschoben sind.

4. Strukturelement (30) nach einem der vorhergehenden Ansprüche, in dem die Flansche (32, 33) und die Rippe (34) eine I-Form bilden.

5. Strukturelement (30) nach einem der vorhergehenden Ansprüche, in dem die Öffnung(en) 36 halbkreisförmig ist bzw. sind.

6. Strukturelement (30) nach einem der Ansprüche 1 bis 4, in dem die Öffnung(en) rechteckig ist bzw. sind.

7. Strukturelement (30) nach einem der Ansprüche 1 bis 4, in dem die Öffnung(en) quadratisch ist bzw. sind.

8. Verfahren zur Herstellung eines Strukturelements (30) für eine hohle Zwischenwand mit zwei länglichen Flanschen (32, 33) zum Stützen der Außenflächen der Zwischenwand, umfassend:
die Bildung einer länglichen Perforationslinie in einem Materialstreifen; und
das Falten des Streifens entlang der Perforierung zur Abgrenzung einer Rippe (34), eines Flansches (32, 33) und mindestens einer an einen der länglichen Flansche (32, 33) angrenzenden Öffnung (36) in der Rippe.

9. Verfahren nach Anspruch 8, bei dem eine weitere Perforationslinie parallel zur ersten gebildet wird und bei dem eine weitere längliche Faltung parallel zur ersten Faltung vorgenommen wird.

10. Verfahren nach Anspruch 8 oder 9, bei dem der Streifen darüber hinaus der Länge nach parallel zu und an der Außenseite der Perforationslinie bzw. der Perforationslinien doppelt gefaltet wird.

11. Wand, umfassend ein Strukturelement (30) nach einem der Ansprüche 1 bis 7.

12. Wand nach Anspruch 11, bei der das Strukturelement (30) im wesentlichen horizontal ist.

13. Zwischenwand nach Anspruch 11 oder 12.

14. Zwischenwand, umfassend ein Rahmenwerk, umfassend vertikale Bundständer (12), die sich zwischen dem Boden und der Decke erstrecken, und horizontale Ausfachungen (14), die horizontal zwischen Bundständerpaaren angeordnet sind, und eine am Rahmenwerk befestigte Gipskartonplattenverschalung, dadurch gekennzeichnet, daß es sich bei der Ausfachung um ein Strukturelement nach einem der Ansprüche 1 bis 7 handelt.

## Revendications

1. Elément structurel (30) pour un mur de cloison creux ayant deux semelles longitudinales (32, 33) pour supporter les faces externes du mur de cloison, les semelles étant séparées par une âme (34) ayant au moins une ouverture (36) pour recevoir un câble électrique, caractérisé en ce que l'ouverture ou chaque ouverture est disposée dans une partie de bord de l'âme (34) jouxtant l'une des semelles longitudinales (32, 33).

2. Elément structurel (30) selon la revendication 1, dans lequel les ouvertures (36) sont disposées dans les deux parties de bord de l'âme (34) jouxtant les deux semelles (32, 33).

3. Elément structurel (30) selon la revendication 2, dans lequel les ouvertures (36) dans l'âme (34) jouxtant une semelle (32) sont décalées par rapport aux ouvertures jouxtant l'autre semelle (33).

4. Elément structurel (30) selon l'une quelconque des revendications précédentes, dans lequel les semelles (32, 33) et l'âme (34) forment une section en I.

5. Elément structurel (30) selon l'une quelconque des revendications précédentes, dans lequel l'ouverture ou chaque ouverture (36) est semi-circulaire.

6. Elément structurel (30) selon l'une quelconque des revendications 1 à 4, dans lequel l'ouverture ou chaque ouverture est rectangulaire.

7. Elément structurel (30) selon l'une quelconque des revendications 1 à 4, dans lequel l'ouverture ou chaque ouverture est carrée.

8. Procédé de formation d'un élément structurel (30) pour un mur de cloison creux ayant deux semelles longitudinales (32, 33) pour supporter les faces externes du mur de cloison, comprenant :
la formation d'une ligne longitudinale de perforations dans une bande de tissu ; et
le pliage de la bande longitudinalement le long des perforations en vue de définir une âme (34), une semelle (32, 33) et au moins une ouverture (36) dans la bande jouxtant une des semelles longitudinales (32,33).

9. Procédé selon la revendication 8, dans lequel une autre ligne de perforations est formée parallèlement à la première, et dans lequel un autre pli longitudinal est effectué parallèlement au premier pli.

10. Procédé selon la revendication 8 ou 9, dans lequel la bande est en outre pliée deux fois longitudinalement parallèlement à et sur l'extérieur de la ou de chaque ligne de perforations.

11. Mur comprenant un élément structurel (30) selon l'une quelconque des revendications 1 à 7.

12. Mur selon la revendication 11, dans lequel l'élément structurel (30) est sensiblement horizontal.

13. Mur de cloison selon la revendication 11 ou 12.

14. Mur de cloison comprenant une structure comprenant des montants verticaux (12) s'étendant entre le plancher et le plafond et des entretoises horizontales (14) disposées horizontalement entre des paires de montants ; et un revêtement de planches en plâtre fixé à la structure, caractérisé en ce que l'entretoise est un élément structurel conformément à l'une quelconque des revendications 1 à 7.
